Europäisches Patentamt

(19) European Patent Office

Office européen des brevets

(11) Numéro de publication: **0 092 284**
**B1**

# (12) FASCICULE DE BREVET EUROPÉEN

(45) Date de publication du fascicule du brevet:
23.09.87

(21) Numéro de dépôt: **83200538.3**

(22) Date de dépôt: **15.04.83**

(51) Int. Cl.⁴: **H 04 B 3/54,** B 60 R 16/02

(54) Procédé et système de transmission de données sur une ligne d'alimentation.

(30) Priorité: **16.04.82 FR 8206590**

(43) Date de publication de la demande:
**26.10.83 Bulletin 83/43**

(45) Mention de la délivrance du brevet:
**23.09.87 Bulletin 87/39**

(84) Etats contractants désignés:
**CH DE FR GB IT LI SE**

(56) Documents cité:
**FR-A-2 403 695**
**FR-A-2 460 573**
**GB-A-2 075 314**

(73) Titulaire: **RTC- COMPELEC, 130, Avenue Ledru-Rollin, F-75011 Paris (FR)**
(84) Etats contractants désignés: **FR**

(73) Titulaire: **N.V. Philips' Gloeilampenfabrieken, Groenewoudseweg 1, NL- 5621 BA Eindhoven (NL)**
(84) Etats contractants désignés: **CH DE GB IT LI SE**

(72) Inventeur: **Six, Jean- Claude Gérard, SPID 209 rue de l'Université, F-75007 Paris (FR)**

(74) Mandataire: **Caron, Jean, SOCIETE CIVILE S.P.I.D. 209, rue de l'Université, F-75007 Paris (FR)**

## Description

L'invention concerne un procédé de transmission séquentielle de données dans lequel on utilise, pour transmettre les données, une ligne issue d'un circuit principal d'alimentation et qui alimente en énergie au moins un circuit périphérique, procédé dans lequel on abaisse brièvement la tension d'alimentation pour transmettre un bit.

Elle concerne également un système pour échanger des données entre un circuit principal et des circuits périphériques et en même temps transmettre de l'énergie du circuit principal vers les circuits périphériques au moyen d'une ligne unique, ledit circuit principal étant muni de moyens pour abaisser brièvement la tension appliquée sur la ligne.

Elle s'applique à la surveillance, à la régulation et à la commande d'organes électriques. De telles fonctions se rencontrent par exemple dans un véhicule à moteur, ou dans une centrale de surveillance ou de gestion d'habitation. Dans un véhicule automobile, une unité centrale échange des informations avec des périphériques couplés avec des organes fonctionnels du véhicule, tels que feux, avertisseur, essuie-glace, jauge d'essence, thermomètre, etc... Dans une centrale domestique, le circuit principal ou unité centrale échange des informations avec des organes de mesure de température, de commande de chauffage, de surveillance volumétrique, d'état d'interrupteurs, etc...

La centralisation des informations entraîne souvent le câblage d'un nombre important de fils lorsque le réseau de prise d'informations est doublé d'un réseau de commande à distance auquel s'ajoute l'alimentation des périphériques en énergie.

Dans toutes ces applications, il est donc souhaitable, pour simplifier au maximum le câblage des dispositifs, qu'une ligne unique transporte à la fois l'énergie pour alimenter les circuits périphériques, ainsi que les données pour les commander, et des informations en retour.

Dans l'art antérieur, on a proposé de nombreuses solutions pour transmettre et recevoir des données sur un fil unique: impulsions à trois ou quatre niveaux de tension, impulsions à durée variable, ou même impulsions à deux polarités. Ces solutions ont toutes l'inconvénient de fort mal se prêter à la transmission d'énergie sur le même fil que les données.

Une solution a ce problème est pourtant apportée par le dispositif décrit dans la demande de brevet FR-A-2 460 573 déposée par la Demanderesse. Avec le dispositif proposé, on abaisse brièvement la tension d'alimentation pour transmettre un bit et c'est la valeur dont est abaissée la tension qui indique la valeur du bit transmis. Le même procédé est utilisé dans les deux sens tour à tour.

Ce procédé a l'inconvénient que, lorsque la tension est abaissée, au moins le dispositif situé dans le périphérique et qui provoque cet abaissement doit absorber tout le courant disponible sur la ligne. On est donc très vite limité en ce qui concerne la puissance qu'il est possible de délivrer aux organes périphériques, car un courant disponible important entraîne l'obligation d'avoir des circuits d'abaissement de tension munis de coûteux transistors de puissance et qui, en outre, dissipent de l'énergie en pure perte.

Le but de l'invention est de procurer un système et un procédé qui permettent de transmettre une quantité d'énergie notable, tout en transmettant des données dans les deux sens et en utilisant pour ses circuits logiques des éléments de très petite puissance, au moins au niveau des circuits périphériques.

L'idée de base de l'invention repose sur deux points:

-1- En même temps que l'on abaisse la tension au moyen d'un shunt vers la masse, on limite le courant disponible, en amont du shunt, dans le circuit principal et, en outre, cette limitation reste maintenue tant que la tension est abaissée même si le dispositif qui l'a provoquée cesse d'agir. Ceci signifie qu'un détecteur de tension vient commander la limitation du courant, en parallèle avec le circuit, logique qui décide, au début, l'abaissement de la tension.

-2- Le circuit périphérique tire parti de cette limitation (maintenue après la fin de l'information logique du circuit principal) pour renvoyer sa propre information vers le circuit principal en maintenant la tension abaissée, ceci en dépensant très peu d'énergie, et au moyen d'un élément interrupteur de petite puissance. Si cette tension n'était pas maintenue par le périphérique, elle remonterait malgré la limitation du courant, comme on le verra dans la description détaillée d'un exemple.

Si les puissances à commander sont très importantes, par exemple dans le cas d'un chauffage électrique, l'énergie véhiculée par la ligne sert seulement à alimenter les circuits de commande (relais, par exemple) ainsi que les circuits électroniques assurant la gestion de la puissance et le décodage des informations envoyées sur la ligne. Dans le cas de puissances plus réduites, la ligne assure également l'alimentation de l'organe proprement dit.

Un procédé de transmission selon l'invention est ainsi notamment remarquable en ce qu'on obtient une information en provenance d'un circuit périphérique vers le circuit principal, après que le circuit principal ait cessé d'abaisser la tension de la ligne, par une prolongation de cet abaissement provoquée par ledit circuit périphérique. En d'autres termes, au lieu d'avoir à abaisser la tension de la ligne, le périphérique se contente de "confirmer" son abaissement. L'avantage est que ce périphérique a besoin de beaucoup moins de puissance pour cela que pour abaisser la tension à partir de sa valeur normale.

Dans une variante du procédé, celui-ci est remarquable en ce que, pour indiquer la valeur d'un bit transmis vers un périphérique, on module la durée pendant laquelle le circuit principal maintient la tension abaissée.

Ceci offre l'avantage de permettre l'utilisation d'une seule valeur de tension abaissée, et donc de faciliter la réalisation du susdit détecteur de tension.

Dans une autre variante du procédé, celui-ci est remarquable en ce que, pour indiquer la valeur d'un bit transmis vers un périphérique, on module la valeur dont est, abaissée la tension.

Ceci offre l'avantage d'éviter la présence de circuits pour convertir l'information logique en information de durée, et donc de simplifier la réalisation du circuit principal.

Dans une variante du procédé, celui-ci est remarquable en ce que la valeur d'un bit transmis d'un périphérique vers le circuit principal est indiquée par la durée pendant laquelle le périphérique prolonge l'abaissement de tension.

Ceci offre l'avantage, comme dans le cas des bits transmis vers le périphérique, que l'on utilise une seule valeur d'abaissement de tension qui peut donc être importante, ce qui améliore l'immunité au bruit.

Dans une autre variante du procédé, celui-ci est remarquable en ce que la valeur d'un bit transmis d'un périphérique vers le circuit principal est indiquée par le niveau de tension auquel le périphérique maintient la ligne.

Ceci offre, comme dans le cas de la transmission vers le périphérique, l'avantage d'éviter la présence de circuits convertisseurs.

Avantageusement, les bits d'un message sont transmis à intervalles de temps réguliers et la fin de message est indiquée par l'absence d'au moins un bit.

Dans l'art antérieur, la fin de message est en général indiquée par un mot particulier, ou au moyen d'un niveau supplémentaire de tension ou d'une durée d'impulsion différente.

Ceci offre l'inconvénient de provoquer une limitation supplémentaire pour le courant fourni aux organes à alimenter, alors que l'absence prolongée d'impulsions permet au contraire l'alimentation la plus constante.

Un système de transmission de données selon l'invention est notamment remarquable en ce que chaque circuit périphérique est muni d'un moyen de détection d'une diminution de tension de la ligne, d'un moyen de maintien de cette tension à une valeur déterminée, et d'un moyen de temporisation pour déterminer la durée dudit maintien de la tension à partir de la détection d'une diminution de cette tension.

Un tel système offre l'avantage de permettre la transmission d'informations par les périphériques sur la ligne d'alimentation en puissance, sans qu'ils comportent eux-mêmes d'éléments de puissance.

Un système selon l'invention est également remarquable en ce que le circuit principal comporte des moyens pour limiter la valeur du courant fourni à la ligne, actionnés en synchronisme avec les susdits moyens pour abaisser brièvement la tension, et des moyens pour prolonger la limitation de la valeur du courant si la tension reste abaissée après que lesdits moyens pour abaisser brièvement la tension aient cessé d'agir.

Ceci offre l'avantage de permettre avec très peu de dissipation de puissance, le maintien à zéro de la ligne par un circuit périphérique.

La description qui va suivre, décrivant des exemples non limitatifs, fera bien comprendre comment l'invention peut être réalisée.

La figure 1 représente la forme de signaux appliqués sur la ligne.

La figure 2 illustre différentes autres possibilités de modulation pour ces signaux.

La figure 3 représente le schéma d'un dispositif de décodage et d'émission de données constituant, dans un circuit périphérique, la partie de traitement de données.

La figure 4 représente le schéma de principe d'un circuit de limitation de courant situé dans le circuit principal.

Le procédé de l'invention est un procédé de transmission séquentielle de données dans lequel on utilise, pour transmettre les données, une ligne issue d'un circuit principal d'alimentation et qui alimente en énergie au moins un circuit périphérique.

Cette ligne est bifilaire, constituée d'un fil de signal et d'un fil de référence, ce dernier étant remplacé par la masse métallique d'un véhicule - le cas échéant.

Dans une automobile, par exemple, le fil de signal sera porté pendant la majeure partie du temps au potentiel de la borne de la batterie qui n'est pas à la masse, soit en général +12 volts.

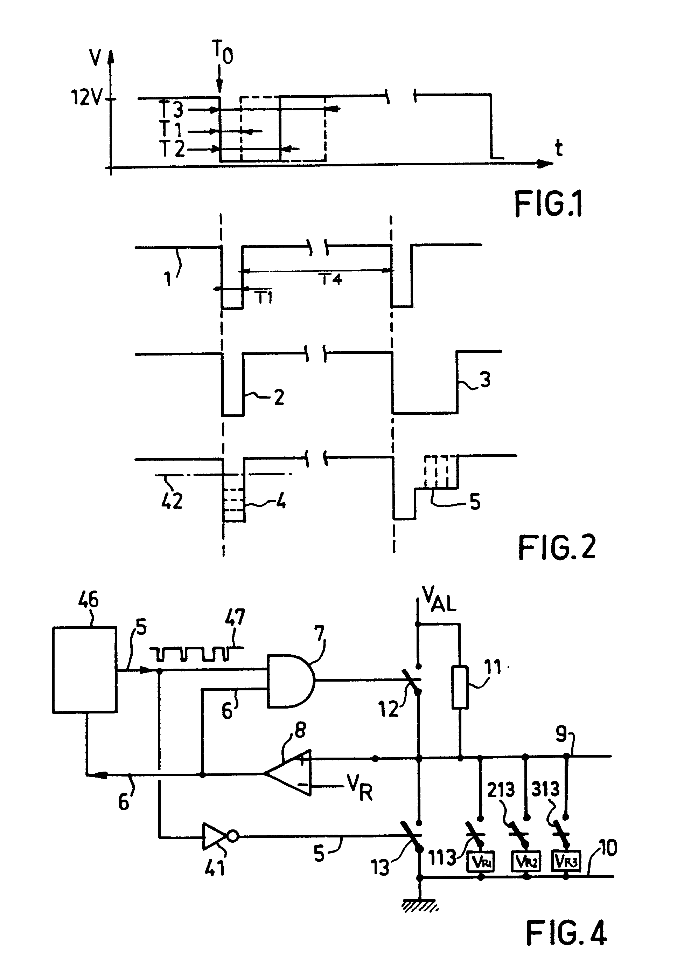

La figure 1 montre que pour transmettre un bit, le circuit principal abaisse brièvement la tension d'alimentation, à partir d'un instant représenté ici par $T_0$.

Par exemple, la valeur du bit transmis vers un périphérique est indiquée en modulant la durée de l'abaissement qui prend la valeur $T_1$ ou la valeur $T_3$ selon que le bit est 1 ou 0. Lorsque l'on interroge un périphérique, l'abaissement de tension provoqué par le circuit principal est arrêté au bout du temps $T_1$, et le circuit périphérique envoie une information vers le circuit principal en maintenant abaissée la tension sur la ligne, c'est-à-dire en prolongeant cet abaissement. La durée pendant laquelle le périphérique prolonge cet abaissement peut indiquer la valeur du bit. Cette prolongation peut durer jusqu'à la fin de l'intervalle $T_2$ pour une valeur du bit, et avoir une durée nulle pour l'autre valeur (dans ce cas, il n'y a pas de prolongation après $T_1$).

Les exemples de la figure 2 montrent un certain nombre de combinaisons possibles entre la durée et l'amplitude des abaissements de la tension. En 1 est représentée la tension d'horloge qui pilote l'ensemble. Le facteur de forme représenté $(T_1/T_4)$ doit être assez faible car, pour fournir le plus d'énergie possible, il convient que la durée des abaissements de tension soit très réduite par rapport à la période de répétition.

La valeur d'un bit transmis vers un périphérique peut, par exemple, être indiquée aussi bien en modulant la valeur dont est abaissée la tension, comme indiqué par les pointillés dans l'impulsion 4. Dans cet exemple, on a choisi d'utiliser quatre niveaux, ce qui permet de transmettre deux bits à la fois (puisque $4 = 2^2$) vers un périphérique.

La valeur d'un bit transmis d'un périphérique vers le circuit principal peut aussi être indiquée par la durée pendant laquelle le périphérique prolonge l'abaissement de tension, comme indiqué par les pointillés dans l'impulsion 5. Ici aussi, on a choisi d'utiliser quatre durées, ce qui permet de transmettre deux bits à la fois vers le circuit principal.

Dans le cas où l'on choisit que la valeur du bit envoyé vers le circuit principal est indiquée par la prolongation ou l'absence de prolongation de l'abaissement initial, l'allure des signaux dans les deux états de l'alternative 0/1 est représentée par les impulsions 2 et 3. Il s'agit d'un cas particulier, le plus simple, des formes suggérées en 4 et 5.

La valeur d'un bit transmis d'un périphérique vers le circuit principal peut aussi être indiquée par le niveau de tension auquel le périphérique maintient la ligne. Dans le cas de transmission d'un seul bit, un exemple des formes correspondant aux deux valeurs de ce bit est représenté en 3 et 5 (en trait plein), c'est-à-dire avec abaissement complet ou demi-abaissement.

Les procédés de l'art antérieur utilisent en général, pour indiquer la fin d'un message, un niveau supplémentaire d'information. Outre qu'il est dommage de réserver un niveau pour cet usage très épisodique, cela implique, selon le procédé de l'invention, une réduction de tension qui concourt à abaisser la puissance que l'alimentation peut transmettre. C'est pourquoi il est préférable d'indiquer une fin de message au moyen d'une interruption dans la séquence régulière d'envoi des bits. Un circuit à constante de temps, situé dans chaque périphérique, est chargé de détecter cette interruption. La période de répétition peut être par exemple de 200 μs, les largeurs des impulsions $T_1$ et $T_3$ étant respectivement de 30 et 150 μs, et celle de $T_2$ étant de 90 μs.

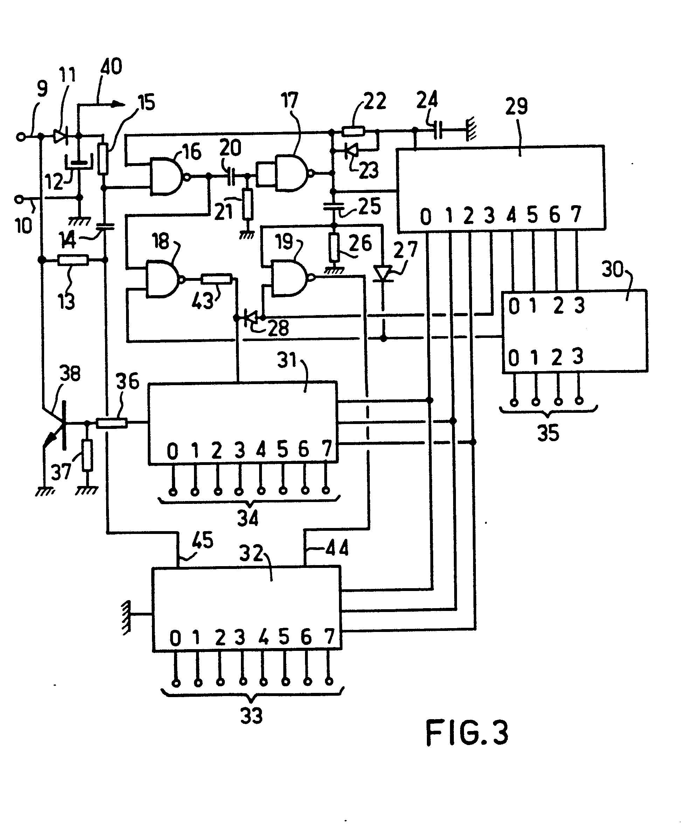

La figure 3 illustre une réalisation d'un circuit d'interface de périphérique. La ligne unique bifilaire 9, 10 provient d'un circuit principal. L'alimentation en énergie de l'organe à commander est réalisée par la connexion 40. Une diode 11 a son anode reliée à la ligne 9 et sa cathode reliée à la connexion 40, et un condensateur 12 est placé entre la connexion 40 et la masse.

La diode 11 a pour effet d'isoler la ligne de l'organe à commander, c'est-à-dire de la charge, lorsque cette ligne est portée à une tension plus basse que la normale. La capacité réservoir évite à la charge de "voir" les abaissements de potentiel. Lorsque le courant fourni par le circuit principal est limité, on pourrait craindre que la charge importante représentée par les organes qu'alimente la ligne consomme le peu de courant alors disponible et empêche donc la tension de remonter lorsque le circuit principal cesse de la maintenir abaissée. C'est l'ensemble diode-condensateur 11, 12 qui empêche cela puisque c'est le condensateur 12 qui fournit alors le courant à la charge, cependant que la ligne est isolée par la diode 11 et n'a aucun courant à fournir à l'organe par le fil 40. Les circuits logiques de la figure 3 sont aussi alimentés par le fil 40, éventuellement via un réseau stabilisateur. Un moyen de détection d'une diminution de tension de la ligne est constitué par la résistance 13, la capacité 14 et la résistance 15 connectés en série entre la ligne 9 et la connexion 40, et dont le point commun à la capacité 14 et à la résistance 15 est branché à une entrée d'un circuit monostable. La résistance 13 étant beaucoup plus faible que la résistance 15, on peut considérer qu'on a simplement une transmission, par la capacité 14, des variations de tension de la ligne 9. Une diminution rapide de cette tension est donc transmise à l'entrée de la porte NON-ET 16, la tension remontant ensuite sur cette entrée, par suite de la liaison à une tension positive via la resistance 15.

Le circuit monostable réalisé d'une manière connue au moyen de deux circuits NON-ET 16, 17 bouclés l'un sur l'autre, d'un condensateur 20 et d'une résistance 21, constitue un moyen de temporisation. Cette temporisation sert à déterminer la durée pendant laquelle le périphérique maintient abaissée la tension de la ligne, à partir de la détection d'une diminution de cette tension au moyen du circuit RC (14, 15) décrit ci-dessus. Cette temporisation correspond à la durée $T_2$ sur la figure 1.

Le transistor 38, dont le collecteur est relié à la ligne 9 et l'émetteur à la masse, constitue un moyen de maintenir la tension de la ligne à une valeur déterminée; ici, cette tension est maintenue à environ 0.1 volt, soit la tension de saturation dudit transistor. La durée de ce maintien à environ 0.1 volt est déterminée par le circuit monostable 16, 17, 20, 21. A cet effet, la sortie du circuit NON-ET 16 est connectée à une entrée du circuit NON-ET 18, dont la sortie est elle-même connectée à l'entrée d'autorisation dite "active LOW enable" d'un circuit démultiplexeur 31, dont la sortie commune commande la base du transistor 38, via la résistance 36. Une résistance 37 relie cette base à la masse.

Les autres éléments de la figure 3 ne font pas directement partie de l'invention, mais vont être décrits comme un exemple de moyens pour réaliser l'ensemble du système. Les bits étant transmis en série, on convient que, le numéro du bit dans la série étant exprimé par exemple en numération binaire à huit chiffres, les quatre chiffres (ou bits) de poids le plus fort constituent l'adresse du périphérique concerné. Du fait de la numérotation à huit chiffres binaires, on peut donc envoyer 256 bits successifs et, en utilisant les quatre chiffres de poids le plus fort, on peut adresser $2^4 = 16$ périphériques différents. Les bits sont envoyés (ou reçus) par groupes de huit bits constituant chacun un mot, et un mot est adressé à (ou reçu de) chaque périphérique tour à tour. Le rang du bit dans le mot de huit bits est indiqué par les trois bits de rang 0, 1, 2 du nombre binaire exprimant le numéro du bit dans la séquence complète de 256 bits. Enfin, le bit de rang 3 de ce même nombre indique si le circuit principal émet vers le périphérique ou, au contraire, s'il reçoit une réponse du périphérique.

Une séquence d'échange sera donc:
Impulsions 1 à 8 interrogation du périphérique 1
Impulsions 9 à 16 chargement du périphérique 1
Impulsions 17 à 24 interrogation du périphérique 2
Impulsions 25 à 32 chargement du périphérique 2
etc...
Impulsions 249 à 256 chargement du périphérique 16.

Si on veut accroître la capacité du système, il suffit de choisir un nombre binaire à plus grand nombre de chiffres. Il faut alors remplacer le compteur à huit étages décrit ci-dessous par un autre ayant un plus grand nombre d'étages, ce remplacement et les modifications correspondantes des autres éléments du circuit étant facilement à la portée de l'homme du métier.

Pour décoder l'information, on utilise un compteur 29 à au moins huit étages. A son entrée de comptage, sont appliquées des impulsions provenant du circuit monostable, prélevées en sortie du circuit 17. A la sortie de ce circuit, est relié en outre un ensemble constitué d'une diode 23 et d'une résistance 22 connectées en parallèle, la cathode de la diode étant reliée à la sortie de la porte. L'autre extrémité de cet ensemble est reliée à la masse par une capacité 24 et est reliée à l'entrée de remise à zéro du compteur 29. Ce circuit à constante de temps a pour but de détecter une interruption dans la séquence régulière d'envoi des bits.

La tension au point commun des trois éléments 22, 23, 24 descend rapidement à zéro avec la sortie du circuit 17, mais remonte ensuite lentement. Elle ne peut donc remonter vers un niveau haut qu'en l'absence d'impulsions négatives en sortie de la porte 17, c'est-à-dire lors d'une interruption dans la séquence d'envoi des bits, correspondant à une fin de message. La remontée vers un niveau haut déclenche alors la remise à zéro du compteur 29. Une telle interruption dans la séquence durera par exemple 1 ms, ce qui correspond à quatre bits omis.

Les sorties de poids 4 à 7 du compteur 29 sont reliées à quatre entrées de comparaison d'un comparateur de mots 30, dont les autres entrées 35 sont reliées par câblage à des sources de tension hautes ou basses définissant l'adresse du périphérique. Lorsque l'adresse issue du compteur est celle du périphérique, le comparateur 30 engendre un état haut sur sa sortie, reliée à une entrée de la porte 18. La sortie de la porte 16 est en outre reliée à l'autre entrée de cette porte 18. Celle-ci fournit alors un état bas à sa sortie, reliée à l'entrée d'autorisation dite "active LOW enable" d'un démultiplexeur 31, ceci pendant la durée de l'impulsion haute en sortie du circuit NON-ET 16, c'est-à-dire pendant la durée désirée pour le maintien de la ligne à l'état bas.

Une condition supplémentaire pour que la ligne soit maintenue à l'état bas est que l'échange d'information soit à réaliser dans le sens "périphérique vers circuit principal".

Ceci est indiqué par le bit de poids 3 en sortie du compteur 29, lorsqu'il est au niveau bas, et a donc lieu pendant un mot de huit bits sur deux. Lorsque, au contraire, il est au niveau haut, une diode 28 transmet ce niveau haut à l'entrée "active LOW enable" du démultiplexeur 31, cependant que la résistance 43 connectée entre la sortie de la porte 18 et ladite entrée du démultiplexeur empêche la sortie de cette porte 18 d'imposer son état bas. De ce fait, le démultiplexeur 31 ne peut transmettre d'état haut en sortie, le transistor 38 reste bloqué, et une transmission à partir du circuit principal peut avoir lieu sans être troublée par une "réponse" d'un périphérique.

Sur la figure 1, les temps $T_1$ et $T_3$ correspondent aux bits 1 ou 0 transmis vers un périphérique. Dans le cas d'une réponse vers le circuit principal, ce sont les temps $T_1$ et $T_2$ qui indiquent alors la valeur du bit. Il suffit donc d'échantillonner la valeur de la tension entre les temps $T_2$ et $T_3$ pour connaître la valeur du bit émis vers le périphérique.

Ceci est obtenu grâce à la porte NON-ET 19 dont la sortie est reliée à l'entrée 44 d'autorisation, dite "active LOW enable", d'une mémoire 32, dont une entrée est reliée à la sortie de bit de poids 3 du compteur 29, et dont l'autre entrée est reliée au point commun d'une capacité 25 et d'une résistance 26 reliées en série entre la sortie de la porte 17 et la masse, à laquelle est reliée ladite résistance 26.

Au bout du temps $T_2$, la sortie de la porte NON-ET 17 remonte à "un". Par l'intermédiaire du circuit différentiateur constitué par la capacité 25 et la résistance 26, une brève impulsion positive est donc appliquée à l'entrée de la porte 19. Si, de plus, on est dans une phase de transmission vers le périphérique, un 1 est également appliqué sur l'autre entrée de la porte 19 reliée à la sortie de poids 3 du compteur 29. Alors, la sortie de la porte 19 fournit un état bas à l'entrée 44 d'autorisation dite "active LOW enable" de la mémoire 32. Celle-ci comporte une entrée d'adresse à trois bits, reliée aux sorties de bits de poids 0, 1, 2 du compteur 29. Pendant le bref instant où l'entrée 44 est à l'état bas, la position de la mémoire, dont l'adresse est indiquée sur son entrée d'adresse, enregistre l'état de l'entrée de données 45, qui est reliée à la ligne 9 par la résistance 13. Chaque position de mémoire de la mémoire 32 est ainsi remise à jour selon l'information présente sur l'entrée 45, pour chaque adresse fournie par le compteur 29 sur ses sorties 0, 1, 2.

L'état des différentes positions de mémoire est disponible en permanence sur les sorties 0 à 7 de la mémoire 32. (Cette mémoire est d'un type dit "Latch" en anglais).

Si le périphérique n'est pas celui auquel le circuit principal s'adresse, la sortie du comparateur de mots 30 est au niveau bas. Alors, la diode 27 dont la cathode est reliée à cette sortie et dont l'anode est reliée au point commun de la capacité 25 et de la résistance 26 empêche la tension de monter sur l'entrée de la porte 19, et la mémoire 32 n'est donc pas validée par son entrée 44 et n'est pas remise à jour.

Des éléments permettant la réalisation matérielle du circuit sont les suivants (les semiconducteurs et circuits intégrés sont disponibles commercialement chez la Demanderesse, sous les références indiquées ci-dessous):

| Résistances: | | |
|---|---|---|
| | 13 = | 15 kΩ |
| | 21 = | 180 kΩ |
| | 22 = | 33 kΩ |
| | 26 = | 18 kΩ |
| | 36 = | 33 kΩ |
| | 37 = | 33 kΩ |
| | 43 = | 33 kΩ |

| Capacités: | | |
|---|---|---|
| | 14 = | 1,5 nF |
| | 20 = | 680 pF |
| | 24 = | 4,7 nF |
| | 25 = | 220 pF |

| Diodes (sauf 11): | 1 N914 |
|---|---|

| Transistor 38: | BC 548 |
|---|---|

| Circuits intégrés: | | |
|---|---|---|
| | 16 à 19 | HEF 4011 |
| | 29 | HEF 4040 |
| | 30 | HEF 4585 |
| | 31 | HEF 4051 |
| | 32 | HEF 4724 |

La diode 11 et le condensateur 12 seront dimensionnés en fonction du courant à délivrer à l'organe alimenté.

La partie du circuit principal représentée sur la figure 4 comporte des moyens pour abaisser brièvement la tension appliquée sur la ligne. Un circuit logique 46, pouvant comporter un microprocesseur, engendre un signal 47 qui présente des impulsions négatives modulées en largeur selon la valeur des bits à transmettre. La séquence représentée en 47 présente par exemples les bits 1 0 1 1 séquentiellement. Les moyens contenus dans le circuit 46 pour engendrer une telle séquence font partie de l'art connu et peuvent facilement être imaginés par l'homme du métier. Le signal 47 est introduit sur une entrée d'un circuit ET 7 et d'un inverseur 41. Les interrupteurs 12 et 13 représentés schématiquement peuvent être des transistors bipolaires ou à effet de champ dont la commandé à partir d'éléments logiques est bien connue de l'homme du métier. Des mesures également connues doivent être prises pour qu'ils s'ouvrent plus vite qu'ils ne se ferment afin d'éviter une mise en court-circuit transitoire de $V_{AL}$ lors de leurs commandes simultanées.

Par convention, ces interrupteurs sont fermés lorsque la sortie du circuit logique qui les commande est à un niveau haut ("1"). Supposons le signal 47 haut, la sortie de l'inverseur 41 est alors au niveau bas ("zéro") et l'interrupteur 13 est ouvert.

L'autre entrée du circuit ET 7 est reliée par la connexion 6 à la sortie d'un comparateur 8 dont l'entrée non inverseuse est réunie au fil de signal 9, et l'entrée de référence est réunie à une tension de référence $V_R$.

Cette tension de référence est choisie entre la tension la plus haute atteinte sur la ligne pendant que le périphérique maintient la tension abaissée et la tension d'alimentation $V_{AL}$. Une tension de 9 volts, par exemple, est convenable si $V_{AL} = 12$ volts. Cette tension peut être engendrée par exemple au moyen d'un pont de résistances connecté à la tension $V_{AL}$.

Ainsi, la tension de référence varie avec la tension d'alimentation, ce qui est important dans le cas d'un véhicule à moteur thermique, dont la tension de batterie peut varier dans des limites importantes. Les tensions indiquées en pointillé sous la référence 4 de la figure 2 peuvent alors, elles aussi, être déterminées par une division de l'alimentation pour varier avec cette dernière. Si, à un instant donné, la tension sur la ligne est normale, c'est-à-dire non abaissée par le circuit principal ou un circuit périphérique, et donc supérieure à $V_R$, le niveau est haut sur la connexion 6 de sortie du comparateur 8. Le circuit ET 7 fournit donc un niveau haut et l'interrupteur 12 est fermé. Le courant fourni à la ligne 9 n'est alors pas limité par les éléments de la partie de circuit représentée. Si, maintenant, le signal 47 descend brièvement au niveau bas ("zéro") , le circuit ET 7 fournit immédiatement un zéro, l'interrupteur 12 s'ouvre et la résistance 11 limite la valeur du courant susceptible d'être fourni sur la ligne 9. En même temps, l'inverseur 41 fournit un niveau haut et l'interrupteur 13 se ferme, court-circuitant la ligne 9 et la masse 10.

Le circuit 46 associé à l'inverseur 41 et à l'interrupteur 13 constituent les susdits moyens pour abaisser brièvement la tension appliquée sur la ligne.

Ce même circuit 46 associé à une entrée du circuit ET 7, ce circuit ET 7 et l'interrupteur 12 constituent des moyens pour limiter la valeur du courant fourni à la ligne, actionnés en synchronisme avec les susdits moyens pour abaisser brièvement la tension.

Si la tension reste abaissée, c'est-à-dire inférieure à la tension de référence $V_R$, après que lesdits moyens pour abaisser brièvement la tension aient cessé d'agir, c'est-à-dire après que le signal 47 soit revenu à l'état haut, le comparateur 8 délivre un signal bas sur la connexion 6, donc le circuit ET 7 délivre aussi un signal bas, et l'interrupteur 12 reste ouvert.

La connexion 6 est également amenée aux circuits logiques 46 de l'unité de commande pour leur fournir une information sur l'état haut/bas de la ligne 9.

Si aucun périphérique ne maintient la tension abaissée, ou lorsqu'un périphérique cesse de maintenir la tension abaissée, la résistance 11 rappelle la tension du fil de signal 9 vers le haut. La seule source de consommation est alors représentée par l'entrée 45 des mémoires 32 des périphériques. Cette consommation est quasi nulle et une résistance 11 de 1 kΩ, par exemple, rappelle très efficacement la tension vers le haut tout en limitant à une douzaine de milliampères le courant disponible en court-circuit.

Lorsque, par contre, l'interrupteur 12 est fermé, le courant disponible n'est limité que par l'alimentation et le dimensionnement dudit interrupteur.

Le comparateur 8 associé à une entrée du circuit ET 7, ce circuit ET 7 et l'interrupteur 12 constituent des moyens pour prolonger la limitation du courant si la tension reste abaissée après que les moyens 46, 41, 13 pour abaisser brièvement la tension aient cessé d'agir.

Sans sortir du cadre de l'invention, on peut imaginer des variantes autour des schémas décrits ci-dessus à titre d'exemple.

Pour transmettre au choix plusieurs amplitudes comme il est représenté en 4 sur la figure 2, il suffit de mettre en parallèle, avec l'interrupteur 13, plusieurs autres interrupteurs 113, 213, 313 en série chacun avec une source de tension de référence ($V_{R1}$, $V_{R2}$, $V_{R3}$ éventuellement variables avec $V_{AL}$). Bien entendu, chaque source de référence a une tension différente pour transmettre une valeur de tension différente. Chaque interrupteur est commandé de façon connue par un élément logique non représenté actionné en fonction des bits à transmettre.

Une réponse à amplitude variable, lors du maintien à l'état bas par le périphérique, peut être obtenue en reliant l'émetteur du transistor 38 (figure 3) non plus à la masse, mais à une tension de référence et en disposant d'autres transistors 38 en parallèle, avec leurs émetteurs reliés à d'autres tensions de référence. La commande de ces transistors en fonction des bits à transmettre, qui seraient alors indiqués par - par exemple - deux démultiplexeurs 31 en parallèle, est à la portée de l'homme du métier.

De même, les durées variables représentées en 5, figure 2, seraient obtenues par exemple au moyen d'une pluralité de résistances 21 (figure 3) commutées à la place l'une de l'autre selon les valeurs des bits à transmettre, au moyen de circuits logiques conventionnels, et d'interrupteurs analogiques. On peut aussi imaginer la transmission d'une grandeur analogique, par exemple en remplaçant la résistance 21 par une résistance variable électroniquement de façon continue.

Si l'on désire transmettre, à partir du circuit principal, plus que deux durées différentes d'abaissement de tension, il suffit que le circuit 46 (figure 4) introduise celles-ci dans le signal 47 au moyen de procédés connus. Bien entendu, ces variantes nécessitent pour leur décodage des moyens différents de ceux décrits ci-dessus, mais qu'un homme du métier peut imaginer facilement: dans la figure 3, le moyen de temporisation 16, 17, 20, 21 sert à la fois à déterminer la durée d'abaissement de tension par le périphérique (via la porte 18) et l'instant d'échantillonnage de la tension émise par le circuit principal (via le condensateur 25 et la porte 19). Dans le cas de signaux plus complexes comme ceux de la figure 2, il faut séparer ces deux fonctions et utiliser plusieurs moyens de temporisation distincts, car alors l'échantillonnage du signal 4 doit être effectué avant le relâchement de la ligne selon le signal 5.

## Revendications

1. Procédé de transmission séquentielle de données dans lequel on utilise, pour transmettre les données, une ligne issue d'un circuit principal d'alimentation et qui alimente en énergie au moins un circuit périphérique, procédé dans lequel le circuit principal provoque un bref abaissement de la tension d'alimentation pour transmettre un bit vers le circuit périphérique, caractérisé en ce que, en même temps que le circuit principal abaisse la tension, il limite le courant susceptible d'être fourni à la ligne, en ce qu'il continue à limiter ce courant tant que la tension reste abaissée, et en ce que, pour transmettre une information en provenance d'un circuit périphérique vers le circuit principal ledit circuit périphérique impose une prolongation de l'abaissement de tension de la ligne, après que le circuit principal ait cessé de provoquer cet abaissement.

2. Procédé de transmission selon la revendication 1, caractérisé en ce que, pour indiquer la valeur d'un bit transmis vers un périphérique on module la durée pendant laquelle le circuit principal maintient la tension abaissée.

3. Procédé de transmission selon l'une des revendication 1 ou 2, caractérisé en ce que, pour indiquer la valeur d'un bit transmis vers un périphérique, on module la valeur dont est abaissée la tension.

4. Procédé de transmission suivant une des revendications 1 à 3, caractérisé en ce que la valeur d'un bit transmis d'un périphérique vers le circuit principal est indiquée par la durée pendant laquelle le périphérique prolonge l'abaissement de tension.

5. Procédé de transmission suivant une des revendications 1 à 4, caractérisé en ce que la valeur d'un bit transmis d'un périphérique vers le circuit principal est indiquée par le niveau de tension auquel le périphérique maintient la ligne.

6. Procédé de transmission suivant une des revendications 1 à 5, dans lequel les bits d'un message sont transmis à intervalles de temps réguliers, caractérisé en ce que la fin de message est indiquée par l'absence d'au moins un bit.

7. Système pour échanger des données entre un circuit principal et des circuits périphériques et en même temps transmettre de l'énergie du circuit principal vers les circuits périphériques au moyen d'une ligne unique, ledit circuit principal étant muni de moyens pour abaisser brièvement la tension appliquée sur la ligne, caractérisé en ce que chaque circuit périphérique est muni d'un moyen de détection d'une diminution de tension de la ligne, d'un moyen de maintien de cette tension à une valeur déterminée, et d'un moyen de temporisation pour déterminer la durée dudit maintien de la tension, à partir de la détection d'une diminution de cette tension, et en ce que le circuit principal comporte des moyens pour limiter la valeur du courant fourni à la ligne, actionnés en synchronisme avec les susdits moyens pour abaisser brièvement la tension, et des moyens pour prolonger la limitation de la valeur du courant si la tension reste abaissée après que lesdits moyens pour abaisser brièvement la tension aient cessé d'agir.

**Patentansprüche**

1. Verfahren zur sequentiellen Datenübertragung, wobei zum Übertragen der Daten eine Ausgangsleitung einer Energieversorgungsschaltung verwendet wird, die wenigstens eine periphere Schaltung speist, und wobei mit diesem Verfahren die Energieversorgungsschaltung eine kurze Senkung der Speisesspannung zum Übertragen eines Bits auf die periphere Schaltung bewirkt, dadurch gekennzeichnet, dass gleichzeitig mit dem Senken der Spannung die Energieversorgungsschaltung den der Leitung zugeführten Strom begrenzt und ihn für die Dauer des gesenkten Spannung begrenzt hält, dass zum Übertragen einer Information aus einer peripheren Schaltung auf die Energieversorgungsschaltung die periphere Schaltung eine Fortsetzung des Spannungsabfalls auf der Leitung bewirkt, nachden die Energieversorgungsschaltung diesen Spannungsabfall eingestellt hat.

2. Datenübertragungsverfahren nach Anspruch 1, dadurch gekennzeichnet, dass zum Angeben des Werts eines auf eine periphere Schaltung übertragenen Bits die Dauer geändert wird, in der die Energieversorgungsschaltung die gesenkte Spannung aufrechterhält.

3. Datenübertragungsverfahren nach einem der Ansprüche 1 oder 2, dadurch gekennzeichnet, dass zum Angeben des Verts eines übertragenen Bits bei einer peripheren Schaltung der Wert des Spannungsabfalls geändert wird.

4. Datenübertragungsverfahren nach einem der Ansprüche 1 bis 3, dadurch gekennzeichnet, dass der Wert eines übertragenen Bits von einer peripheren auf die Energieversorgungsschaltung durch den Dauer angegeben wird, in der die periphere Schaltung den Spannungsabfall fortsetz.

5. Datenübertragungsverfahren nach einem der Ansprüche 1 bis 4, dadurch gekennzeichnet, dass der Wert eines übertragenen Bits von einer peripheren Schaltung auf die Energieversorgungsschaltung durch den Spannungspegel angegeben wird, auf dem die periphere Schaltung die Leitung hält.

6. Datenübertragungsverfahren nach einem der Ansprüche 1 bis 5, bei dem die Bits einer Nachricht in regelmässigen Zeitabständen übertragen werden, dadurch gekennzeichnet, dass das Ende der Nachricht durch die Abwesenheit mindestens eines Bits angegeben wird.

7. System zum Austauschen von Daten zwischen einer Energieversorgungsschaltung und peripheren Schaltungen und zum gleichzeitigen Übertragen von Energie von der Energieversorgungsschaltung auf die peripheren Schaltungen mittels einer einzigen Leitung, wobei die Energieversorgungsschaltung Mittel zum kurzzeitigen Senken der Spannung auf der Leitung enthält, dadurch gekennzeichnet, dass jede periphere Schaltung ein Mittel zum Detektieren eines Spannungsabfalls auf der Leitung, ein Mittel zum Festhalten dieser Spannung auf einem bestimmten Wert und ein Verzögerungsmittel zum Bestimmen der Dauer dieser Haltezeit der Spannung ausgehend von der Detektion einer Reduktion dieser Spannung enthält, und dass die Energieversorgungsschaltung Mittel zum Begrenzen des Wertes des der Leitung zugeführten Stroms, die synchron mit den erwähnten Mitteln zum kurzzeitigen Senken der Spannung aktiviert werden, und Mittel zum Fortsetzen der Begrenzung des Stromwerts enthält, wenn die Spannung einen niedrigeren Wert behält, nachdem die Mittel zum kurzzeitigen Senken der Spannung ihre Aktivität beendet haben.

**Claims**

1. A method of sequentially transmitting data, in which use is made for data transmission of a line extending from a main supply circuit which supplies at least one peripheral circuit with energy, in which method the main circuit brings about a short decrease of the supply voltage for the transmission of a bit to the peripheral circuit, characterized in that the main circuit not only reduces the voltage, but also linits the current susceptible to be supplied to the line, in that it continues to limit this current whilst the voltage remains reduced, and in that, for transmitting an information originating from a peripheral circuit to the main circuit the said peripheral circuit causes the reduction of the voltage of the line to

**0 092 284**

be prolonged after the main circuit has stopped to bring about this reduction.

2. A transmission method as claimed in Claim 1, characterized in that for indicating the value of a bit transmitted to a peripheral circuit the duration for which the main circuit keeps the voltage reduced is modulated.

3. A transmission method as claimed in any one of Claims 1 or 2, characterized in that for indicating the value of a bit transmitted to a peripheral circuit the value by which the voltage is reduced is modulated.

4. A transmission method as claimed in any one of Claims 1 to 3, characterized in that the value of a bit transmitted from a peripheral circuit to the main circuit is indicated by the duration for which the peripheral circuit causes the reduction of the voltage to be prolonged.

5. A transmission method as claimed in any one of Claims 1 to 4, characterized in that the value of a bit transmitted from a peripheral circuit to the main circuit is indicated by the voltage level at which the peripheral circuit holds the line.

6. A transmission method as claimed in any one of Claims 1 to 5, which the bits of a message are transmitted at regular time intervals, characterized in that the end of the message is indicated by the absence of at least one bit.

7. A system for exchanging data between a main circuit and peripheral circuits and for simultaneously transmitting energy from the main circuit to the peripheral circuits by means of a single line, the said main circuit being provided with means for reducing briefly the voltage applied to the line, characterized in that each peripheral circuit is provided with means for detecting a reduction of the voltage of the line, with means fo maintaining this voltage at a given level and with timing means for determining the duration of the said maintenance of the voltage from the detection of a reduction of this voltage, and in that the main circuit comprises means for limiting the value of the current supplied to the line operated synchronously with the aforementioned means for briefly reducing the voltage and means for prolonging the limitation of the value of the current if the voltage remains reduced after the said means for briefly reducing the voltage have stopped to operate.

FIG.1

FIG.2

FIG. 4

FIG.3